(19) Europäisches Patentamt / European Patent Office / Office européen des brevets

(11) **EP 4 312 162 A1**

(12) **EUROPEAN PATENT APPLICATION**

(43) Date of publication:
**31.01.2024  Bulletin 2024/05**

(21) Application number: **22187846.5**

(22) Date of filing: **29.07.2022**

(51) International Patent Classification (IPC):
**G06N 5/045** (2023.01)    **G06N 20/00** (2019.01)

(52) Cooperative Patent Classification (CPC):
**G06N 5/045; G06N 20/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Busch, Julian**
  **81539 München (DE)**
• **Kehrer, Johannes**
  **81829 München (DE)**
• **Lebacher, Michael**
  **84513 Töging am Inn (DE)**
• **Weber, Stefan Hagen**
  **81927 München (DE)**

(74) Representative: **Siemens Patent Attorneys**
**Postfach 22 16 34**
**80506 München (DE)**

(54) **GRAPHICAL REPRESENTATION OF EXPLAINABLE ARTIFICIAL INTELLIGENCE**

(57)    A graph is determined based on an explainable artificial intelligence analysis of predictions made by a machine-learning algorithm. Global dependencies between different data points are highlighted by the graph.

FIG 4

**Description**

TECHNICAL FIELD

Various examples of the disclosure relate to techniques of explainable artificial intelligence. Various examples of the disclosure specifically relate to providing a graphical representation of a graph including nodes that are associated with data points, wherein edges are defined by similarity measures between explanations for a prediction of a machine-learning algorithm associated with the respective data points.

BACKGROUND

Machine-learning (ML) algorithms are applied in various industry fields. Technical devices generate large amounts of data; ML algorithms can process the data, e.g., to improve productivity, create additional user value, or for control functionality. Data from sensors is omnipresent in all kinds of heavy machinery and equipment.

For example, one use case of sensors is monitoring the functionality of heavy machinery such as pumps, turbines, die casting machines, etc. To do so, sensors are installed on these machines and measure different physical conditions such as current, temperature, pressure; this enables monitoring of the state of the system as a whole. If the machinery is subject to different damages, changes in the machine state, etc. the sensor values typically show suspicious patterns and anomalies in the data.

According to prior art implementations, ML algorithms can be trained to detect these anomalies.

Such prior art implementations face certain restrictions and drawbacks. For instance, the data output by sensors typically includes time series of one or more observables. The structure of the data is complex, and accordingly the ML algorithms tend to be complex themselves. The operation of such ML algorithms is accordingly typically not human-understandable, which is sometimes referred to as "black-box ML algorithms". This means that it is not possible to understand how the ML algorithm behaves globally, i.e., how the ML algorithm processes the data in general, and locally, i.e., how a certain prediction is made. This in turn makes it difficult to configure an ML algorithm to provide reliable output. It also leads to problems with the detection of root-causes of anomalies and consequently to a lack of trust and acceptance from user perspective. It is then sometimes not possible to appropriately control the technical device based on the output of the ML algorithm, because an action to take, e.g., with respect to a detected anomaly is unclear.

SUMMARY

Accordingly, a need exists for advanced techniques of processing data of a technical system using an ML algorithm. Specifically, a need exists for advanced techniques which mitigate or overcome at least some of the above-identified restrictions and drawbacks. A need exists for human-understandable explanations of an output of the ML algorithm, e.g., a detected anomaly in the data.

Techniques of explainable artificial intelligence (XAI) are disclosed. Some examples are based on a graphical representation of a graph. Such graphical representation helps to identify data points with similar explanations. Thereby, common explanation patterns shared by data points in a thus-defined cluster can be identified. Further, data points that don't belong to any cluster can be detected as anomalous and be examined further.

A computer-implemented method includes obtaining a plurality of feature vectors. The feature vectors of the plurality of feature vectors are indicative of operational characteristics of a technical device. Each feature vector includes multiple respective feature values. The method also includes determining, for each one of the plurality of feature vectors, a relevance of each feature value with respect to a prediction of a machine-learning algorithm. The prediction of the machine-learning algorithm is based on the respective feature vector. By determining the relevance for each one of the plurality of feature vectors, a plurality of feature relevance vectors is obtained. The method also includes determining a graph based on the feature relevance vectors. Edges of the graphs correspond to a similarity measure between the respective feature relevance vectors. The method further includes determining and outputting a graphical representation of the graph. At least one of a length or a thickness of the edges of the graphical representation of the graph represents the similarity measure between the respective pair of feature relevance vectors connected by that edge.

A computer program or a computer program product or a computer-readable storage medium includes program code. The program code is executable by at least one processor. Execution of the program code causes the at least one processor to obtain a plurality of feature vectors. The plurality of feature vectors is indicative of operational characteristics of a technical device. Each feature vector includes multiple respective feature values. The at least one processor is further caused to determine, for each one of the plurality of feature vectors, a relevance of each feature value. This relevance is with respect to a prediction of a machine-learning algorithm that is based on the respective feature vector. Thereby, a plurality of feature relevance vectors is obtained. The at least one processor is further caused to determine a graph based on the feature relevance vectors. Edges of the graph correspond to a similarity measure between the respective feature relevance vectors. The at least one processor is further caused to determine and output a graphical representation of the graph. At least one of a length or a thickness of the edges of the graphical representation of the graph represents the similarity measure between the respective pair of feature relevance vectors connected by that edge.

A processing device includes at least one processor and a memory. The at least one processor is configured to load program code from the memory and to execute the program code. The at least one processor, upon execution of the program code, is configured to obtain a plurality of feature vectors indicative of operational characteristics of a technical device. Each feature vector includes multiple respective feature values. The at least one processor is further configured to determine, for each one of the plurality of feature vectors, a relevance of each feature value with respect to a prediction of a machine-learning algorithm that is based on the respective feature vector. Thereby, a plurality of feature relevance vectors is obtained. The at least one processor is further configured to determine a graph based on the feature relevance vectors. Edges of the graph correspond to a similarity measure between the respective feature relevance vectors. The at least one processor is further configured to determine and output a graphical representation of the graph. At least one of a length or a thickness of the edges of the graphical representation of the graph represents the similarity measure between the respective pair of feature relevance vectors connected by that edge.

It is to be understood that the features mentioned above and those yet to be explained below may be used not only in the respective combinations indicated, but also in other combinations or in isolation without departing from the scope of the invention.

BRIEF DESCRIPTION OF THE DRAWINGS

FIG. 1 schematically illustrates a system including a processing device and a technical device according to various examples.

FIG. 2 schematically illustrates a processing pipeline for processing data associated with a technical device according to various examples.

FIG. 3 is a flowchart of a method according to various examples.

FIG. 4 is an illustration of a graphical representation of a graph formed from feature relevance vectors determined for multiple feature vectors for which a machine-learning algorithm can make a prediction according to various examples.

FIG. 5 is a normalized polar plot of multiple feature relevance vectors according to various examples.

FIG. 6 is a normalized polar plot of multiple feature relevance vectors according to various examples.

DETAILED DESCRIPTION

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of analyzing predictions of an ML algorithm are disclosed. Various kinds and types of ML algorithms can benefit from the techniques disclosed herein. Examples include anomaly detection based on ML algorithms. Other examples include a classification or regression tasks performed by a ML algorithm. Examples of ML algorithms include deep neural network, e.g., convolutional neural networks, support vector machines, multilayer perceptrons, etc.

The ML algorithms can operate based on feature vectors that are indicative of operational characteristics of a technical device.

Various kinds and types of technical devices can be considered. Examples include, e.g., factory equipment, e.g., manufacturing apparatuses, robots, or assembly line parts. Further examples include power plants or powerplant parts, e.g., turbines or generators. Examples include mobility infrastructure equipment, e.g., people mover, automated escalators, lifts, etc. Further examples include heavy machinery such as pumps, turbines, die casting machines, etc. Further examples include vehicles, e.g., cars, locomotives, airplanes, or ships.

Various examples pertain to explaining predictions of a ML algorithm. The ML algorithm makes predictions based on feature vectors. A prediction may sometimes be made based on a single feature vector. In other scenarios, a prediction may be based on multiple feature vectors.

A graphical representation of a graph is output that explains the prediction provided by the ML algorithm. The graph is determined using XAI techniques. To determine the graph, prior-art techniques of XAI may be employed. The graph includes multiple nodes that represent data points of the prediction. Each data point can be associated with a feature vector. More specifically, each data point can be associated with a feature relevance vector indicative of a relevance of feature values associated with the respective feature vector for the prediction of the ML algorithm.

A multitude of XAI methods for determining are available in the prior art and can be relied upon. See, e.g., Lundberg, Scott M., and Su-In Lee. "A unified approach to interpreting model predictions." Advances in neural information processing systems 30 (2017) - the so-called SHAP method. Shapley values can be calculated. The Shapley value is the average marginal contribution of that feature value to the prediction of the ML algorithm. Shapley values provide the additive influence of each feature value on the specific, local prediction of the ML algorithm Also see Ribeiro, Marco Tulio, Sameer Singh, and Carlos Guestrin. ""Why should i trust you?" Explaining the predictions of any classifier." Proceedings of the 22nd ACM SIGKDD international conference on knowledge discovery and data mining. 2016 - the so-called LIME method.

The graph is built by considering whether certain data points share or do not share a certain explanation pattern with respect to the prediction provided by the ML algorithm. For instance, if a data point in the further data point of the graph have similar underlying feature relevance vectors, this may be expressed by the respective edge of the graph that extends between the two data points. To determine which data points share or do not share a certain explanation pattern, a similarity measure between the data points can be determined.

As will be shown herein in further detail, the graphical representation is configured to be easily interpretable by domain experts and non-expert users. Using the graph helps to bridge the gap between strictly global and strictly local explanations. Common explanation patterns shared by groups of data points are visualized by the graphical representation of the graph. Also, anomalous explanations are visualized by the graphical representation of the graph.

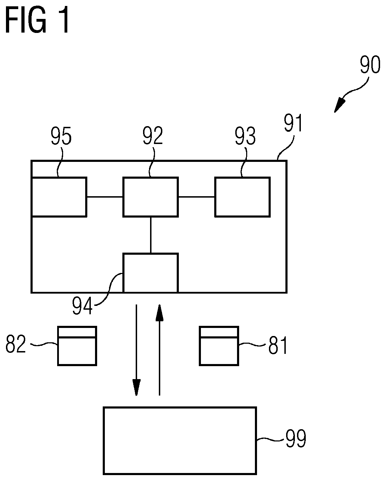

FIG. 1 schematically illustrates a system 90 according to various examples. The system 90 includes a processing device 91 and a technical device 99. The technical device 99 can provide, to the processing device 91, state data 81. The state data 81 could be based on sensor data, e.g., could be indicative of one or more physical observables characterizing the operation of the technical device 99. Alternatively, or additionally, the state data 81 could be based on control signals used by the technical device 99 for operations, e.g., an actuator occurrence, actuator voltages, to give just a few examples.

The processing device 91 includes a processor 92 that is coupled with a non-volatile memory 93. The processor 92 is also coupled with a communications interface 94. The processor 92 can receive and transmit data from and towards the technical device 99 via the communications interface 94. The processor 92, based on program code stored in the memory 93, can analyze operational characteristics of the technical device 99.

In detail, based on the state data 81, it would be possible to determine multiple feature vectors indicative of operational characteristics of the technical device 99. The feature vectors can have a certain dimensionality; i.e., include a number of feature values. Different feature values may be associated with different aspects of the state data 81 or may be associated with different dimensions of a given aspect of the state data 81.

Then, the processor 92 can load and execute program code from the memory 93. Upon loading and executing the program code, the processor 92 can process the feature vectors using an ML algorithm. Also, the processor 92 can explain outputs of the ML algorithm based on the feature vectors. Based on the output of the ML algorithm and/or an explanation associated with the output, it would be possible to control the technical device 99. For this, control data 82 may be output by the processor 92 via the communications interface 94 towards the technical device 99.

Furthermore, the processing device 91 includes a human machine interface (HMI) 95. The HMI 95 could include, e.g., a monitor, a keyboard, a mouse, etc. The processor 92 can determine and output a graphical representation of a graph that is determined based on feature relevance vectors and output the graphical representation via the HMI 95. In particular, it would be possible to provide a graphical user interface (GUI) to a user via the HMI 95. The graphical representation can be an interactive object of the GUI so that the user may interact and appropriately configure the graphical representation, i.e., change one or more properties of the graphical representation.

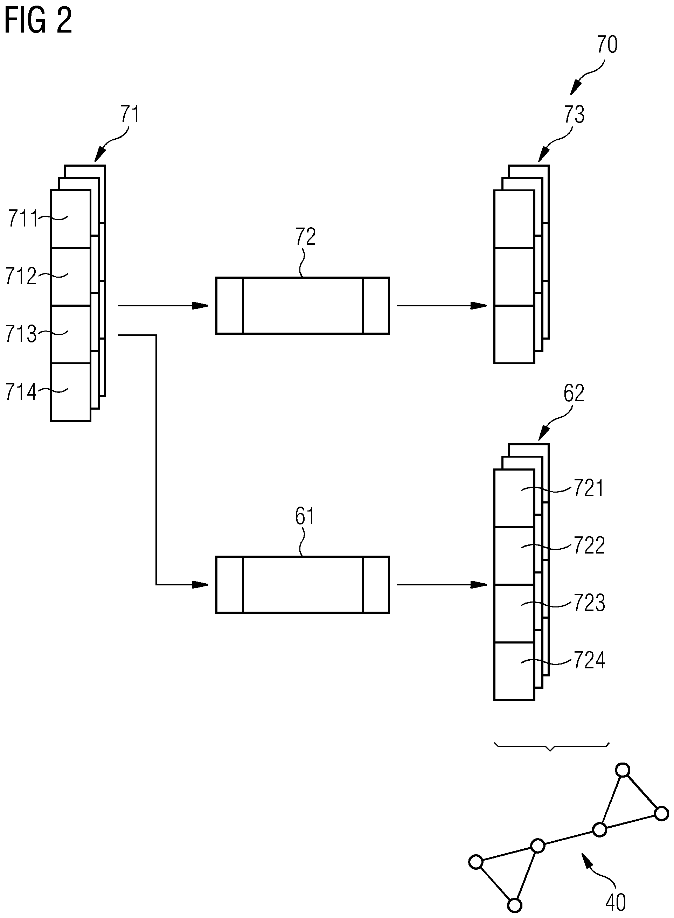

Details with respect to such logic executed by the processor 92 are illustrated next in connection with FIG. 2.

FIG. 2 schematically illustrates a processing pipeline 70 according to various examples. A feature vector 71 is illustrated. The feature vector 71 includes multiple feature values 711-714. The feature vector 71 is processed by the ML algorithm 72; the ML algorithm outputs and output vector 73.

As illustrated in FIG. 2, the ML algorithm 72 can process multiple feature vectors 71 and output a respective output vector 73 for each processed feature vector 71. A prediction can be based on multiple output vectors 73 and, hence, based on multiple processed feature vectors 71.

FIG. 2 also schematically illustrates aspects with respect to determining a feature relevance vector 62. For this, an XAI algorithm 61 processes the feature vector(s) 71 and outputs the feature relevance vector(s) 62. Each feature relevance vector includes multiple feature relevance values 721-724. These feature relevance values 721-724 correlate with the feature values 711-714. The feature relevance values 721-724 explain the relative contribution of each respective feature value 711-714 to the prediction of the ML algorithm 72, i.e., to the output vector 73. For instance, if the feature value 712 has a relatively high impact on to the output vector 73, then the feature relevance value 722 associated with the feature value 712 will take a high value different than the other feature relevance value 721, 723, 724.

For instance, the XAI algorithm 61 may operate based on the SHAP method or the LIME method, or both. Other XAI prior art method may be employed.

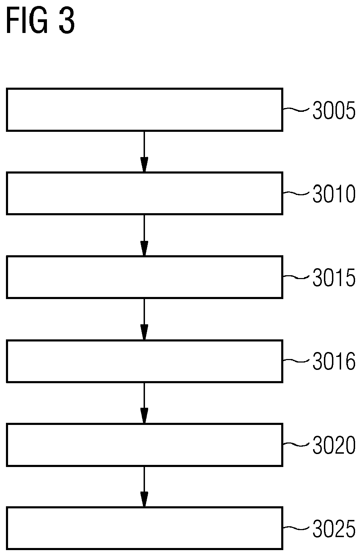

It is possible to obtain, from multiple feature vectors, multiple feature relevance vectors. These multiple feature relevance vectors provide local explanations of the behavior of the ML algorithm 72, for the respective feature vector. It is then possible to consider a global explanation by assessing similarities between different feature relevance vectors and, based on this, determine a graph 40. Respective techniques are explained below in connection with the method of FIG. 3.

FIG. 3 is a flowchart of a method according to various examples. For instance, the method of FIG. 3 may be executed by the processor 92 of the processing device 91, upon loading and executing program code from the memory 93.

For instance, the method of FIG. 3 could be executed as part of a computer-aided design or maintenance process of a technical device (cf. FIG. 1: technical device 99). For instance, properties of the technical device can be analyzed based on feature vectors that include feature values that qualify respective properties of the technical device. An ML algorithm can process the feature vectors to make a prediction for a hidden state of the technical device. XAI techniques can be employed to explain this prediction. Based on such explanation, it would then be possible to re-design or re-configure / control the technical system (cf. FIG. 1: control data 82).

At box 3005, multiple feature vectors (cf. FIG. 2: feature vector 71) are obtained. Each feature vector is indicative of operational characteristics of a technical device (cf. FIG. 1: system 90 and technical device 99 providing the state data 81) .

Next, at box 3010, it is possible to determine, for each one of the feature vectors obtained at box 3005, a respective feature relevance vector (cf. FIG. 2: feature relevance vector 62). The feature relevance vectors include multiple relevance values associated with the feature values of the feature vectors and indicative of the relevance of each feature value with respect to the prediction of the ML algorithm. Shapeley values may be used as the relevance values, see Lundberg, Scott M., and Su-In Lee. "A unified approach to interpreting model predictions." Advances in neural information processing systems 30 (2017): Equation 4 and associated explanations.

This may correspond to making a prediction. The prediction can be based on the multiple feature vectors.

Next, at box 3015, it is possible to determine a graph (cf. FIG. 2: graph 40) based on the feature relevance vectors. Edges of the graph correspond to similarity measures between the respective feature relevance vectors. The graph thus provides a global explanation of the prediction of the ML algorithm.

At optional box 3016, it would be possible to determine class the amongst the feature relevance vectors based on the similarity measure. Members of a class the can show a significant similarity.

At box 3020 it is then possible to determine and output (e.g., as part of a GUI provided via an HMI) a graphical representation of the graph. Here, the length and/or the thickness of the edges of the graphical representation of the graph represents the similarity measure between the respective pair of feature relevance vectors connected by that edge. This makes it possible to comprehend, on a global scale, whether certain data points are closely related, i.e., pertain to a similar situation with respect to the prediction of the ML algorithm; or whether a certain pair of data points are associated with different underlying explanations for the prediction of the ML algorithm. For instance, if the edge of the graph is short and/or thick, then the corresponding pair of data points associated with that edge have a high similarity measure, i.e., similar feature values of the pair of feature vectors have an impact on the prediction of the ML algorithm.

It would be possible to also output a graphical representation of the clusters optionally determined at box 3016, e.g., labels highlighting the clusters, together with the graphical representation of the graph. It would also be possible to configure the graphical representation of the graph to represent the clusters.

In optional box 3025, it would be possible to obtain user feedback via a GUI including the graphical representation of the graph. The user feedback may be used to reconfigure the graphical representation, i.e., change one or more properties of the graphical representation.

The method of FIG. 3 is now explained in further detail.

Data is given by $X = (x,y)$ where $x = (x_i)_{i=1,...,n}$ represents $n$ input data points, each represented by a k-dimensional feature vector $x_i \in \mathbb{R}^k$ and $y = (y_i)_{i=1,...,n}$ denotes the class labels $y_i \in \mathbb{R}$ associated with the input data points, i.e., the output vectors.

An arbitrary ML algorithm $f(x_i) \approx y_i$ (e.g., Neural Network, Random Forest, etc.) is trained to predict the class labels from the input data, i.e., determine the output vectors $y_i$ based on the input vectors $x_i$. The prediction task could be a regression problem or a classification problem if the output can be represented by a real valued number (e.g., probabilities, scores, regression values, log-odds) such that $f: \mathbb{R}^k \to \mathbb{R}$. No further restrictions are required for $f(.)$.

Next, feature relevance vectors are determined, one for each feature vector (box 3010). I.e., instance-level feature relevance scores are determined. Such scores can be derived with standard local XAI methods such as SHAP or LIME. For simplicity, hereinafter Shapley relevance values are considered, which can be approximated with SHAP; however, similar concepts also exist from other XAI methods.

Fo Shapley values, the relevance of feature i for the prediction for data point $x$ is given as

$$\phi_j(x) = \sum_{S \subseteq \{1,...,k\} \setminus \{j\}} \frac{|S|!\,(k - |S| - 1)!}{k!} \big( f(x; S \cup \{j\}) - f(x; S) \big),$$

where S denotes all possible subsets of feature values and $f(x;S)$ is the prediction for x given fixed values for the features contained in S and marginalizing over the remaining features. See Lundberg, Scott M., and Su-In Lee. "A unified approach to interpreting model predictions." Advances in neural information processing systems 30 (2017): Equation 4 and associated explanations. The right-hand term ($f(x;S\cup\{j\})$-$f(x;S)$) corresponds to the marginal contribution of the respective Shapley value; while the left-hand term corresponds to a weighted average, given equal weight to all possible combinations.

Intuitively, the Shapley value quantifies the contribution of feature j to the output /(x) and it holds that

$$\sum_{j=1,...,k} \phi_j(x) = f(x) - E_X[f(X)],$$

where $E_x[f(X)]$ denotes the expected output (in the notation "lower case" x denotes a concrete feature value, while "upper case" X denotes the possible distribution of the respective random variable).

That is, the model output can be decomposed into the expected model output and the individual contributions of the feature values. Note that feature relevance values can have a positive or negative sign, depending on whether they increase or decrease the prediction in relation to the expected prediction. For convenient notation:

$$\phi(x_i) = \big( \phi_1(x_i), ..., \phi_k(x_i) \big)$$

i.e., $\phi(x_i)$ is given as the vector containing all Shapely values for a certain input feature vector $i$.

Next, an undirected graph $G = (V, E)$ are defined, where V denotes a set of nodes representing individual entities (e.g., feature vectors) and $E \subset V \times V$ denotes a set of edges connecting certain pairs of nodes. A graphical representation of the graph can be determined (cf. box 3020) based on an adjacency matrix $A = (a_{i,j}) \in \mathbb{R}^{|V| \times |V|}$

, where $a_{i,j}$ corresponds to a numerical weight attached to the edge between vertex *i* and vertex j.

A Cluster Explanation Graphs (CEG) - i.e., a certain graphical representation of the graph - serves as a tool for identifying data points with similar explanations for identifying common explanation patterns shared by data points in the same cluster. The dge weights between two nodes i,j quantifies the similarities of the corresponding data points with respect to their explanations (cf. box 3015):

$$a_{i,j} = sim(\phi(x_i), \phi(x_j)).$$

While different similarity measures could be used, one option is the Euclidean distance.

Then, the graphical representation is determined. To identify common explanation patterns in an automated way, it is possible to determine clusters amongst data points based on the similarity measure. For instance, spectral Clustering may be used - see, . Y. Ng, M. I. Jordan, Y. Weiss: On spectral clustering: Analysis and an algorithm. In: Advances in Neural Information Processing Systems. 2, 2002, S. 849-856. Such clusters correspond to partitions of the graph. The clusters can be highlighted in the graph, such that the user obtains an overview over the number of explanation patterns and the number of corresponding feature vectors per cluster. The graphical representation can be superimposed onto the graph. It would also be possible to configure the graphical representation of the graph to represent the clusters. One option for configuring the graphical representation of the graph to represent the clusters would be to introduce an additional offset in the distance between feature vectors for each cluster border.

Labels corresponding to clusters or anomalous explanations could be generated automatically.

Instead of relying on a graph clustering algorithm, clusters could also be defined by a user by interfacing with the graphical representation of the graph.

An appropriate graphical representation / visualization of the graph enables an intuitive human perception of the complex data set. An interaction possibility with the graph - i.e., the graph is output as an interactive graphics object of a GUI, cf. HMI 95 in FIG. 1 - enables the viewer to define what part and in which way the data is visualized to amplify the problem-solving process.

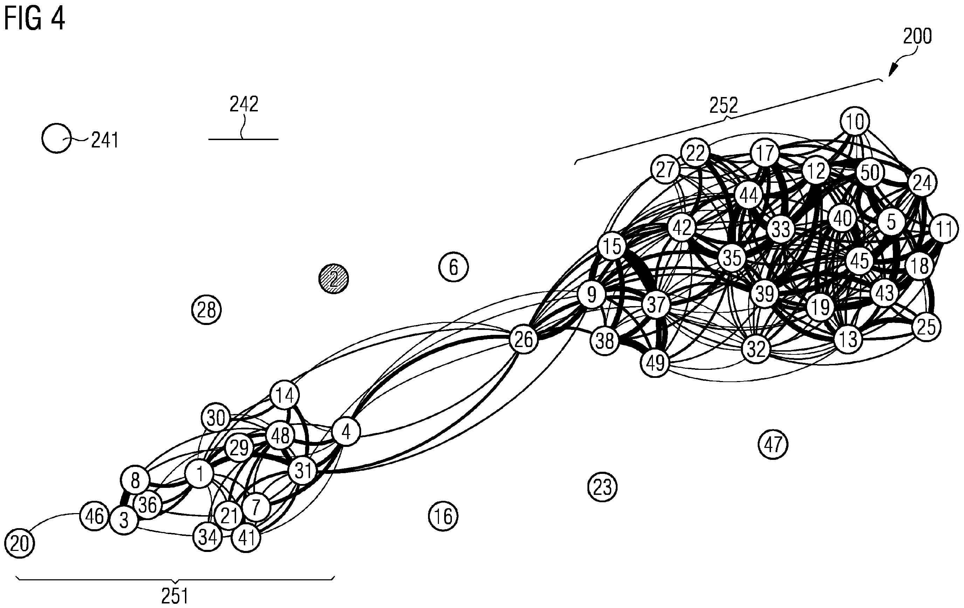

FIG. 4 schematically illustrates an example graphical representation 200 of an underlying graph, e.g., as determined at box 3020 of FIG. 3. Nodes 241 of the graph - corresponding to the individual data points of the explanation - are depicted as circles, and edges 242 - illustrating co-dependencies of the data points in accordance with the similarity measure - are illustrated using lines.

Thus, co-dependencies between data points can also be encoded by the graphical appearance of the edges, e.g., the size (1D width of edge), color (sequential intensity).

Generally, data points with a high co-dependency (i.e., high similarity measure) are closer together (due to a layout algorithm, e.g., force directed layout).

Optionally, as illustrated in FIG. 4 the data points may be graphically coded to provide additional information. This could be done by their size (2D area), their color (sequential intensity), or font size of label (as contextual component).

For instance, the data point with the strongest feature relevance value (the maximum feature relevance value of each data point is encoded into the grey scale of the data points in FIG. 4) are not part of the two clusters.

Two clusters 251, 252 are highlighted; as well as individual, abnormal feature vectors (numbered "28", "2", "6", "16", "23", and "47"). As can be seen in FIG. 4, two clusters 251, 252 emerge (node clusters on each side connected mostly through nodes "4" and "26"). The graphical representation 200 is configured to represent those clusters 251, 252; this is achieved by introducing a length offset to the length of the edges 242 whenever an edge crosses a border between two clusters.

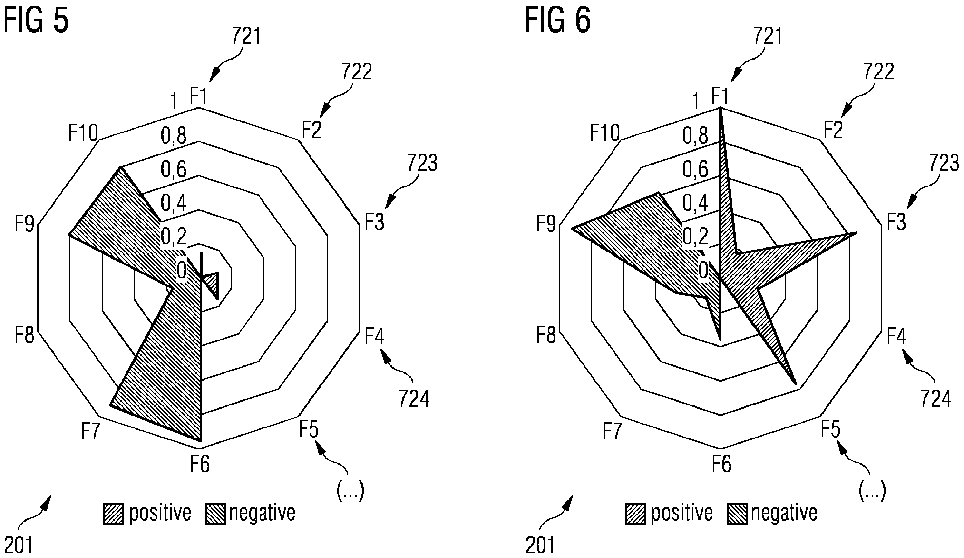

To get insight into the individual cluster characteristics, the feature relevance values of each data point (nodes in FIG. 4) can be visualized by replacing the node with a glyph that represents the feature relevance values. A selection of a node of the graphical representation of the graph can thus trigger a graphical representation of the respective feature relevance values via the GUI. Since a feature value might influence the prediction in a positive or negative way, positive and negative impact can be visualized separately, e.g., with two different colors or shading or fillings. E.g., a data point with ten feature relevance values could result in a glyph as illustrated in FIG. 5 or FIG. 6, where normalized polar plots are used as graphical representations 201 of the feature relevance values 721, 722, 723, 724, etc.. It is easy for the human eye to compare glyphs regarding similarities or dissimilarities. In that way the user can tell immediately the feature values that are responsible for the cluster. If the number of feature values gets too high, the glyph design can be optionally simplified. In addition, data points with anomalous explanations, such as node "2" in FIG. 4, could be inspected and compared with common explanations appearing in clusters.

As explained above in connection with FIG. 3: box 3025, the graphical representation 200 may be output as part of an interactive element of a GUI. Accordingly, the graphical representation of the graph can be output as an interactive graphics object of a GUI, and the user may change one or more properties of the graphical representation via the GUI.Next, aspects with respect to such interactive functionality are explained.

Interactive functionality with respect to the graphical representation 200 of the graph 40 enables a deeper analysis to reveal the important insights.

Some properties that may be interactively changed are listed below in TAB. 1.

TAB. 1: Various properties of the graphical representation of the graph that can be changed by the user.

| Interaction with graph via GUI | Example details |
| --- | --- |
| Zoom in/out | Enables the user to focus on details while keeping the overall perspective in mind. |
| Filtering | Filter can be applied to all aspects of the graphical representation of the graph. E.g., the user can filter nodes on feature importance, edges on co-dependency or on feature names. Furthermore, node can be filtered based on their edge count. |
| Re-layout of graph (automatic and manually) | The layout of the graph can be done with various predefined algorithms. The layout can be repeated whenever the filtering leads to a new graph structure. |
| Change of color maps | Based on the inherent semantic of nodes and edges the color map might have to be adjusted. |

Summarizing, techniques have been disclosed to explain predictions provided by ML algorithms, irrespective of the type of ML algorithm (model-agnostic explanation). Feature relevance vectors can be determined, e.g., using methods such as SHAP or LIME. By the usage of a graphical representation of a graph for data points that are related through a similarity measure of the respective explanations, it is possible to combine local and global explanations in a meaningful and consistent way and provide insights about common and anomalous explanation patterns. The provided visualizations (graphical representation of the graph) are human-interpretable and allow for interactive exploration and decision making. Employing graph theory, it is possible to derive automated decisions using graph clustering techniques such that clusters of data points can be identified automatically, which could, e.g., be used for generating new labels.

In further detail, the following effects can be achieved:

Explanations can be provided for arbitrary types of machine learning models, i.e., model agnostic explanations are possible.

Explanations of scored instances (data points) can be provided in a consistent framework: globally (to cluster data points with similar explanation patterns), as well as locally (a specific explanation for an individual data point).

The provided explanation are presented in a way that is human-interpretable. Since model explanations are often complicated themselves, they need to be presented appropriately such that they can lead to actionable insights

Even without an active user, it is possible to process the generated explanations automatically.

The explanation reveals relationships between data points with respect to their explanations and provide insights about common explanation patterns shared between groups of data points as well as anomalous explanations.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, above, various aspects have been disclosed according to which an expert analyzes the graph to conclude on reasons for the prediction of the ML algorithm. According to some examples, the graph may also be processed automatically. For instance, it would be possible to automatically trigger manual inspections or provide summary reports to the operator based on the graph.

**Claims**

1. A computer-implemented method, comprising:

   - obtaining (3005) a plurality of feature vectors (71) indicative of operational characteristics of a technical device (99), each feature vector (71) including multiple respective feature values (711, 712, 713, 714),
   - determining (3010), for each one of the plurality of feature vectors (71), a relevance (721, 722, 723, 724) of each feature value (711, 712, 713, 714) with respect to a prediction of a machine-learning algorithm (72) that is based on the respective feature vector (71), thereby obtaining a plurality of feature relevance vectors (62),
   - determining (3015) a graph (40) based on the feature relevance vectors (62), wherein edges of the graph (40) correspond to a similarity measure between the respective feature relevance vectors (62), and

- determining and outputting (3020) a graphical representation (200) of the graph (40), wherein at least one of a length or a thickness of the edges (242) of the graphical representation of the graph represents the similarity measure between the respective pair of feature relevance vectors (62) connected by that edge.

2. The computer-implemented method of claim 1,

   wherein the graphical representation (200) of the graph (40) is output as part of a computer-aided design or maintenance process of a technical device (99),
   wherein the feature values (711, 712, 713, 714) quantify different properties of the technical device (99).

3. The computer-implemented method of claim 1 or 2, further comprising:

   - determining clusters (251, 252) amongst the feature relevance vectors based on the similarity measure, and
   - outputting a graphical representation of the clusters together with the graphical representation of the graph, or configuring the graphical representation of the graph to represent the clusters.

4. The computer-implemented method of any one of the preceding claims,
   wherein the graphical representation of the graph is output as an interactive graphics object of a graphical user interface, wherein one or more properties of the graphical representation can be changed via the graphical user interface.

5. The computer-implemented method of any one of the preceding claims,
   wherein the graphical representation (200) of the graph (40) is output as an interactive object of a graphical user interface, wherein a selection of nodes of the graphical representation (200) triggers outputting of a graphical representation (201) of the respective feature relevance values (721, 722, 723, 724) via the graphical user interface.

6. The computer-implemented method of claim 5,
   wherein the graphical representation (201) of the feature relevance values (721, 722, 723, 724) is provided as a normalized polar plot.

7. The computer-implemented method of any one of the preceding claims,
   wherein the similarity measure is the Euclidian distance between the respective feature relevance vectors (62).

8. A computer program comprising program code executable by at least one processor, wherein execution of the program code causes the at least one processor to:

   - obtain (3005) a plurality of feature vectors (71) indicative of operational characteristics of a technical device (99), each feature vector (71) including multiple respective feature values (711, 712, 713, 714),
   - determine (3010), for each one of the plurality of feature vectors (71), a relevance (721, 722, 723, 724) of each feature value (711, 712, 713, 714) with respect to a prediction of a machine-learning algorithm (72) that is based on the respective feature vector (71), thereby obtaining a plurality of feature relevance vectors (62),
   - determine (3015) a graph (40) based on the feature relevance vectors (62), wherein edges of the graph (40) correspond to a similarity measure between the respective feature relevance vectors (62), and
   - determine and output (3020) a graphical representation (200) of the graph (40), wherein at least one of a length or a thickness of the edges (242) of the graphical representation of the graph represents the similarity measure between the respective pair of feature relevance vectors (62) connected by that edge.

9. The computer program of claim 8,
   wherein execution of the program code causes the at least one processor to perform the method of any one of claims 1 to 7.

10. A processing device comprising at least one processor and a memory, wherein the at least one processor is configured to load program code from the memory and execute the program code, wherein the at least one processor, upon execution of the program code, is configured to:

    - obtain (3005) a plurality of feature vectors (71) indicative of operational characteristics of a technical device (99), each feature vector (71) including multiple respective feature values (711, 712, 713, 714),
    - determine (3010), for each one of the plurality of feature vectors (71), a relevance (721, 722, 723, 724) of each feature value (711, 712, 713, 714) with respect to a prediction of a machine-learning algorithm (72) that is based on the respective feature vector (71), thereby obtaining a plurality of feature relevance vectors (62),
- determine (3015) a graph (40) based on the feature relevance vectors (62), wherein edges of the graph (40) correspond to a similarity measure between the respective feature relevance vectors (62), and
- determine and output (3020) a graphical representation (200) of the graph (40), wherein at least one of a length or a thickness of the edges (242) of the graphical representation of the graph represents the similarity measure between the respective pair of feature relevance vectors (62) connected by that edge.

11. The processing device of claim 10, wherein the at least one processor, upon the execution of the program code, is configured to perform the method of any one of claims 1 to 7.

FIG 1

FIG 2

FIG 3

FIG 4

EP 4 312 162 A1

FIG 6

FIG 5

Europäisches
Patentamt

European
Patent Office

Office européen
des brevets

# EUROPEAN SEARCH REPORT

Application Number

EP 22 18 7846

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KITAMURA YOSHIFUMI ET AL: "mTSeer: Interactive Visual Exploration of Models on Multivariate Time-series Forecast", PROCEEDINGS OF THE 2021 CHI CONFERENCE ON HUMAN FACTORS IN COMPUTING SYSTEMS, [Online] 8 May 2021 (2021-05-08), pages 1-15, XP093016198, New York, NY, USA DOI: 10.1145/3411764.3445083 ISBN: 978-1-4503-8096-6 Retrieved from the Internet: URL:https://dl.acm.org/doi/pdf/10.1145/3411764.3445083> [retrieved on 2023-01-23] * abstract * * page 3 - page 14 * ----- | 1-11 | INV. G06N5/045 G06N20/00 |
| A | LI CHENLU ET AL: "SSRDVis: Interactive visualization for event sequences summarization and rare detection", JOURNAL OF VISUALIZATION, SPRINGER BERLIN HEIDELBERG, BERLIN/HEIDELBERG, vol. 23, no. 1, 9 October 2019 (2019-10-09), pages 171-184, XP037021288, ISSN: 1343-8875, DOI: 10.1007/S12650-019-00609-X [retrieved on 2019-10-09] * the whole document * ----- | 1-11 | TECHNICAL FIELDS SEARCHED (IPC) G06N |

The present search report has been drawn up for all claims

| Place of search | Date of completion of the search | Examiner |
|---|---|---|
| The Hague | 24 January 2023 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LUNDBERG, SCOTT M. ; SU-IN LEE.** A unified approach to interpreting model predictions. *Advances in neural information processing systems,* 2017, vol. 30
- **RIBEIRO, MARCO TULIO ; SAMEER SINGH ; CARLOS GUESTRIN.** Why should i trust you?'' Explaining the predictions of any classifier. *Proceedings of the 22nd ACM SIGKDD international conference on knowledge discovery and data mining.,* 2016

- **Y. NG ; M. I. JORDAN ; Y. WEISS.** On spectral clustering: Analysis and an algorithm. *Advances in Neural Information Processing Systems,* 2002, vol. 2, 849-856